# EUROPÄISCHE PATENTSCHRIFT

(11) **EP 4 447 848 B1**
(45) Veröffentlichungstag und Bekanntmachung des Hinweises auf die Patenterteilung: **03.12.2025**
(21) Anmeldenummer: 22843110.2
(22) Anmeldetag: 12.12.2022
(51) Int. Cl.: A61C 1/12, A61C 1/18, A61C 1/06, A61C 1/04, A61C 1/14, A61C 19/04

(54) **ENDODONTISCHES BEHANDLUNGSSYSTEM**
ENDODONTIC TREATMENT SYSTEM
SYSTÈME DE TRAITEMENT ENDODONTIQUE

(30) Priorität: 14.12.2021 DE 102021133052
(43) Veröffentlichungstag der Anmeldung: 23.10.2024
(73) Patentinhaber: Brand KG, 59609 Anröchte (DE)
(72) Erfinder: BUCHALLA, Harald, 59494 Soest (DE)
(74) Vertreter: Wickord, Wiro
(86) Internationale Anmeldenummer: PCT/DE2022/100945
(87) Internationale Veröffentlichungsnummer: WO 2023/110022

(56) Entgegenhaltungen:
- EP-A1- 1 792 579
- EP-A1- 3 838 488
- US-A1- 2021 330 425
- US-B1- 6 575 747

## Beschreibung

Die Erfindung betrifft ein endodontisches Behandlungssystem mit einer Wurzelkanalfeile und mit einem Handstück.

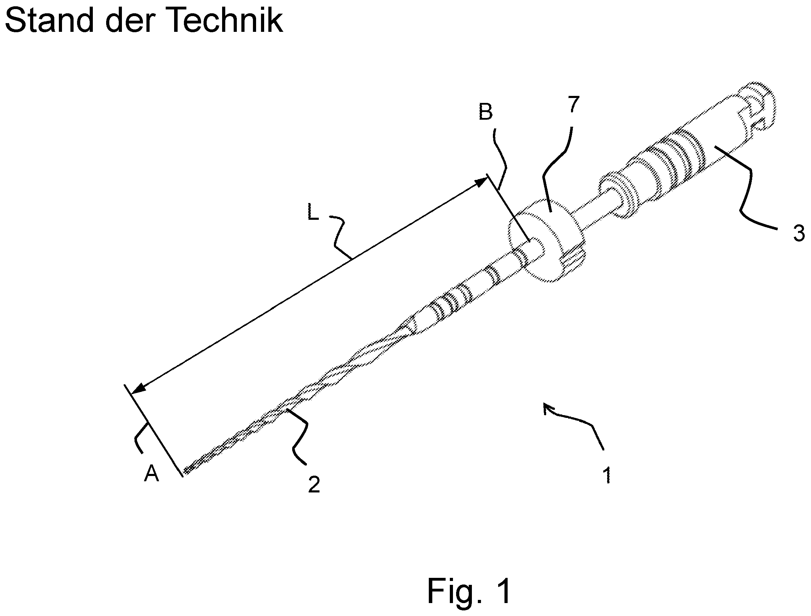

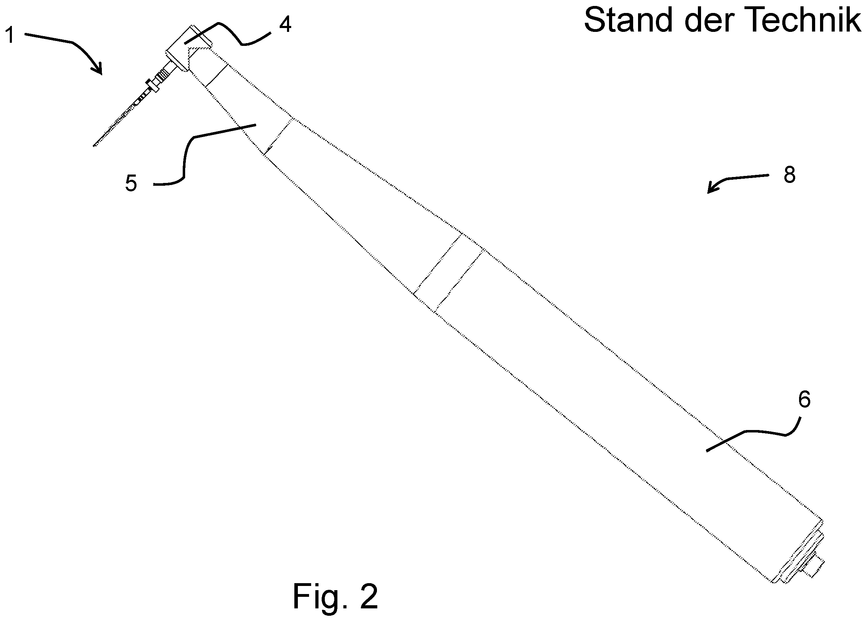

In der zahnärztlichen Praxis werden für die Aufbereitung von entzündeten Zahnwurzeln sogenannte Wurzelkanalfeilen 1, nachfolgend auch kurz Feilen genannt, genutzt. Die Figur 1 gibt eine solche aus dem Stand der Technik bekannte Wurzelkanalfeile 1 an. Diese Feile 1 umfasst einen Arbeitsbereich 2 und einen Verbindungsschaft 3. Der Arbeitsbereich 2 besteht aus Stahl oder in neuerer Zeit aus einer Nickel-Titan-Legierung (Ni-Ti). Er weist eine bohrer- beziehungsweise fräserähnliche Struktur auf und wird in der Regel durch Schleifen oder Erodieren hergestellt. Der Arbeitsbereich 2 wird in den Wurzelkanal eingeführt. Der Verbindungsschaft 3 ist über ein Winkelgetriebe ("Winkelstück") 5 mit einem motorischen Antrieb 6 verbunden. Die Einheit aus Winkelstück 5 und motorischem Antrieb 6 bezeichnet man oft als "Handstück" 8. Ein aus dem Stand der Technik bekanntes Handstück dieser Art ist in der Figur 2 angegeben.

Feilen beziehungsweise Feilendrähte und deren Arbeitsbereiche aus Ni-Ti zeichnen sich durch extreme Flexibilität bei gleichzeitig guter Torsionsfestigkeit und überdurchschnittlich guter Widerstandsfähigkeit gegen zyklische Ermüdung aus.

Der Verbindungsschaft 3 an den Feilen ist heute vorgesehen, da für eine rein reibschlüssige Kopplung beziehungsweise Arretierung des Arbeitsbereichs ohne Verbindungsschaft im Kopf 4 des Winkelstücks eine dort ansässige Spannvorrichtung (zum Beispiel eine Spannzange) aufgrund des kleinen Durchmessers des Arbeitsbereichs beziehungsweise dessen unprofilierten Drahtendes (im Bereich 0,8mm bis 1,5mm) sehr hohe Spannkräfte aufbringen müsste. Diese Forderung widerspricht aber extrem der Anforderung nach einem möglichst kleinen Kopf des Winkelstücks.

Aufgrund der nötigen Kopplung über einen Formschluss ist das manuelle Einführen der Feilen aufwändig (Applizieren einer überlagerten Drehbewegung beim Einführen) und durch Fehlversuche geprägt. Weiterhin müssen die geometrischen Abmessungen der Schäfte exakt toleriert und entsprechend genau gefertigt werden.

Des Weiteren sind in der Regel die notwendigen Kräfte zum Öffnen der Spannvorrichtungen in den Köpfen der Winkelstücke vergleichsweise hoch. In Verbindung mit den sehr kleinen Flächen der Betätigungseinrichtungen kann das bei häufiger Betätigung sehr unangenehm bis schmerzhaft für die entsprechenden Finger (-kuppen) sein.

Vor Beginn der Behandlung wird in der Regel anhand von Röntgenaufnahmen die Anatomie des zu behandelnden Zahns examiniert und die ungefähr benötigte Länge des Arbeitsbereichs der Feile ermittelt. Danach erfolgt eine Sondierung mit einer speziellen Feile (Gleitpfadfeile) und einer Messeinrichtung, um die präzise Distanz zu ermitteln, die die Feile in den Wurzelkanal eindringen darf, ohne über das Ende des Kanals (Apex) in das umliegende Gewebe vorzustoßen (Apex-Vermessung). Geschieht das, kann es zu schwerwiegenden Nachwirkungen der Behandlung kommen.

Des Weiteren steht in verschiedenen Bereichen des Mundraums und auch in Abhängigkeit von Gegebenheiten bei der behandelten Person (zum Beispiel der Öffnungsfähigkeit des Kiefers) nicht beliebig viel Raum für die Nutzung beliebig langer Feilen zur Verfügung.

Die aktuell nicht mögliche Spannung der Feile beziehungsweise des Feilendrahts ohne einen definierten Verbindungsschaft (beispielsweise über einen Reibschluss) verhindert das in der Spann-Tiefe verstellbare Spannen einer Feile und so eine Längenverstellung des Feilensegmentes, welches aus dem Kopf heraustritt (Arbeitsbereich und eventuell ein Stück verlängernder, unprofilierter "Feilendraht").

Während der Behandlung führt die Feile, angetrieben durch den motorischen Antrieb und gekoppelt über das Winkelgetriebe kontinuierliche oder oszillierende rotatorische Bewegungen aus.

Die aktuelle Eindringtiefe des Arbeitsbereichs in den Wurzelkanal ist dabei dem System aus motorischem Antrieb und Motorsteuerung nicht bekannt und kann daher auch keinen Einfluss auf die Bewegung der Feile im Wurzelkanal nehmen. Axiale translatorische Bewegungen der Feile werden in der Regel über die Bewegung des gesamten Handstücks durch den Zahnarzt initiiert. Bei der gesamten Behandlung überdeckt je nach Stellung des Winkelstücks der im Vergleich zum Durchmesser des Feilendrahts große Kopf des Winkelstücks die Sicht auf Teile des zu behandelnden Zahns. Da das Winkelstück sich während der Behandlung im Mundraum des Patienten befindet, muss es nach der Behandlung aufwändig gereinigt und sterilisiert werden. Das schränkt auch die Auswahl der verwendbaren Konstruktionsmaterialien sowie die Nutzung eventueller Elektronik/ Sensorik im Winkelstück stark ein.

Um die Feile über den Verbindungsschaft mit dem Winkelstück zu koppeln, wird der Verbindungsschaft der Wurzelkanalfeile mittels überlagerter Drehbewegungen manuell in den Kopf des Winkelstücks eingeführt. Hierzu muss mithin die dort vorhandene Verriegelungsvorrichtung geöffnet sein. Das kann permanent zum Beispiel über einen Klappmechanismus oder temporär, zum Beispiel über einen federbelasteten Druckknopf geschehen. Nach Schließen der Verriegelungsvorrichtung wird der Verbindungsschaft der Feile dort mittels einer Verriegelung sowohl gegen Herausfallen gesichert als auch zur Übertragung von Drehmomenten formschlüssig gekoppelt. Wie oben beschrieben kann das sichere Verbinden von Feile und Winkelstück manuell schwierig und insbesondere bei häufiger Betätigung schmerzhaft sein.

Da die Arbeitslänge L des Arbeitsbereichs in den Arbeitsbereichsgrenzen A und B (L = Strecke A-B, vergleiche Figur 1) der am Markt befindlichen Wurzelkanalfeilen fest vorgegeben ist, muss diese entsprechend der vorgefundenen Physiognomie des Wurzelkanals und der Zugänglichkeit zum Ort der Behandlung aus einer Vielzahl vorhandener Längen fest ausgewählt werden. Die maximale Eindringtiefe in den Wurzelkanal markiert der Zahnarzt nach der Apex-Vermessung in der Regel mittels einer auf dem Arbeitsbereich der Feile befindlichen Anschlagscheibe 7 beziehungsweise Kunststoffscheibe (Stopper) und einem Bezugspunkt auf dem zu behandelnden Zahn. Außer einer visuellen Kontrolle hat er keine Möglichkeit die aktuelle Tiefe zu kontrollieren oder vor einem zu tiefen Eindringen gewarnt zu werden. Es gab einige, bislang nicht erfolgreiche Versuche, der rotatorischen Feilenbewegung eine (kleine) translatorische axiale Bewegung zu überlagern. Dieses wurde über eine mechanisch induzierte "Schlagbewegung" im Kopf versucht. Eine echte, im Hub steuerbare translatorische Bewegung, idealerweise in Korrelation mit der aktuell vorherrschenden Drehbewegung, ist nicht bekannt.

Aufgrund der mechanischen Anforderungen "Winkelgetriebe" und "Spannvorrichtung" ist eine Verkleinerung des Kopfes des Winkelstücks nur begrenzt möglich. Die technischen Grenzen scheinen hier erreicht. Beim Winkelstück handelt es sich um ein hochwertiges Wirtschaftsgut. Eine "Single-Use" Lösung, die die aufwändige Aufarbeitung unnötig machen würde, ist nicht wirtschaftlich umsetzbar.

US 6 575 747 B1 und US 2021/330425 A1 offenbaren ein endodontisches Behandlungssystem umfassend ein Handstück und umfassend eine lösbar an das Handstück ankoppelbare Wurzelkanalfeile, wobei die Wurzelkanalfeile einen metallischen Feilendraht mit einer Spitze, mit einem sich an die Spitze anschließenden Mittelabschnitt und mit einem sich an den Mittelabschnitt anschließenden Anschlussabschnitt aufweist, wobei das Handstück ein Gehäuse, einen in dem Gehäuse angeordneten Antriebsmotor und eine drehsteif mit einer Antriebswelle des Antriebsmotors verbundene und rotierbar in dem Gehäuse gelagerte Kupplung zum Übertragen einer Rotationsbewegung des Antriebsmotors auf den Feilendraht aufweist. Aufgabe der Erfindung ist es, ein kompakt bauendes endodontisches Behandlungssystem mit einem axial verstellbaren Arbeitsbereich anzugeben.

Zur Lösung der Aufgabe weist die Erfindung die Merkmale des Patentanspruchs 1 auf.

Die Grundidee beruht auf der Tatsache, dass die mechanischen Eigenschaften von Ni-Ti-Legierungen sich durch Legierungszusammensetzung, mechanischem Prozessing und Wärmebehandlung insgesamt in einem weiten Bereich einstellbar und lokal in einem Körper verändern lassen. So ist es zum Beispiel möglich, Teile eines Feilendrahts (einer Feile) federähnlich und mit vergleichsweise hoher Rückstellkraft auszubilden und andere elastisch und/oder plastisch und vorzugsweise reversibel verformbar und "weich" beziehungsweise biegeelastisch zu gestalten. Eine weitere Eigenschaft ist die extrem hohe zyklische Ermüdungsfestigkeit von Feilendrähten aus diesen Legierungen.

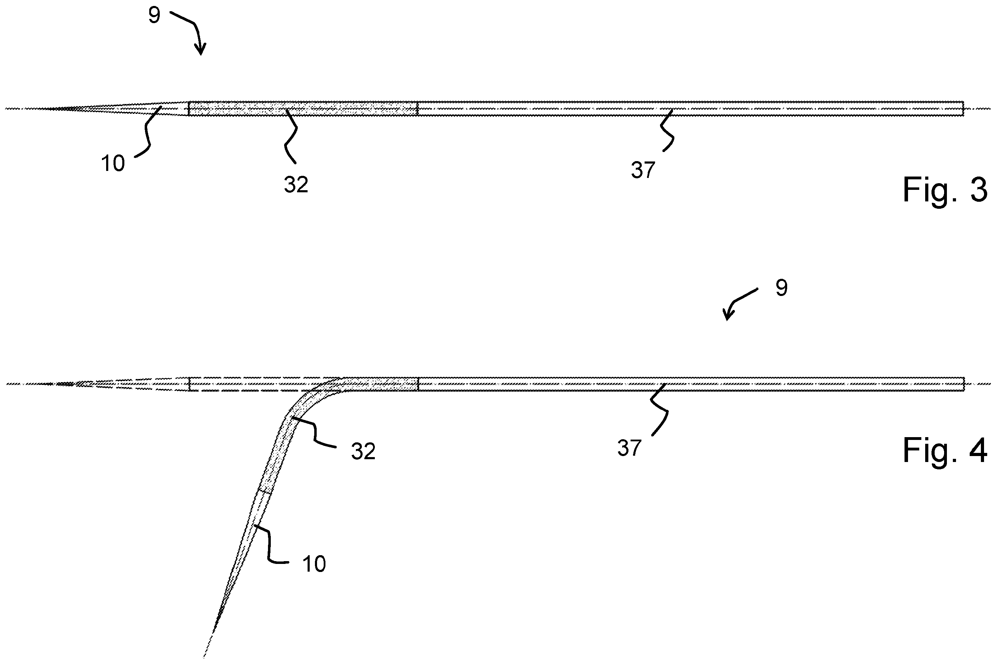

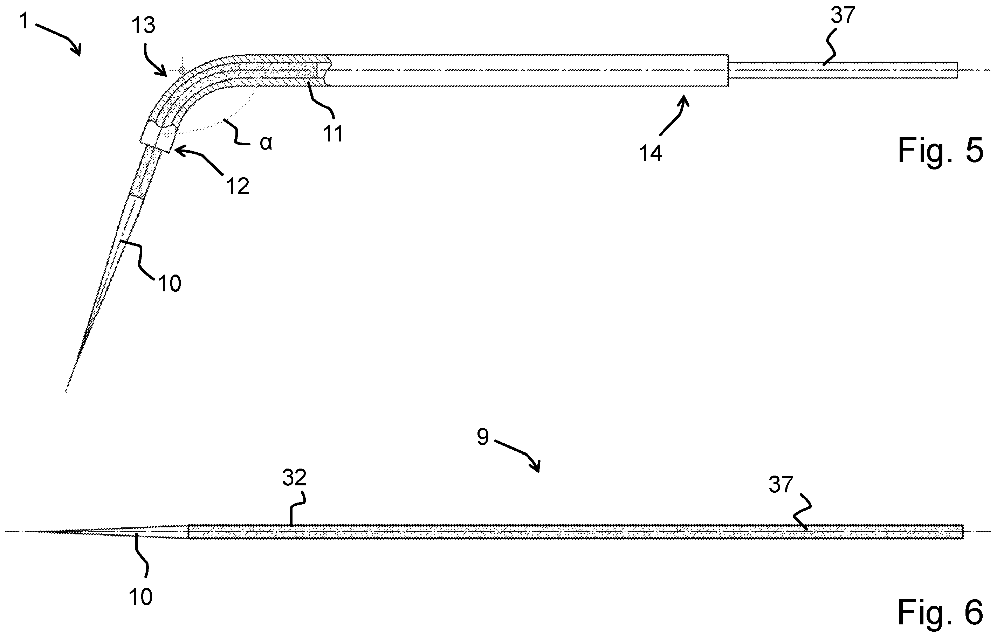

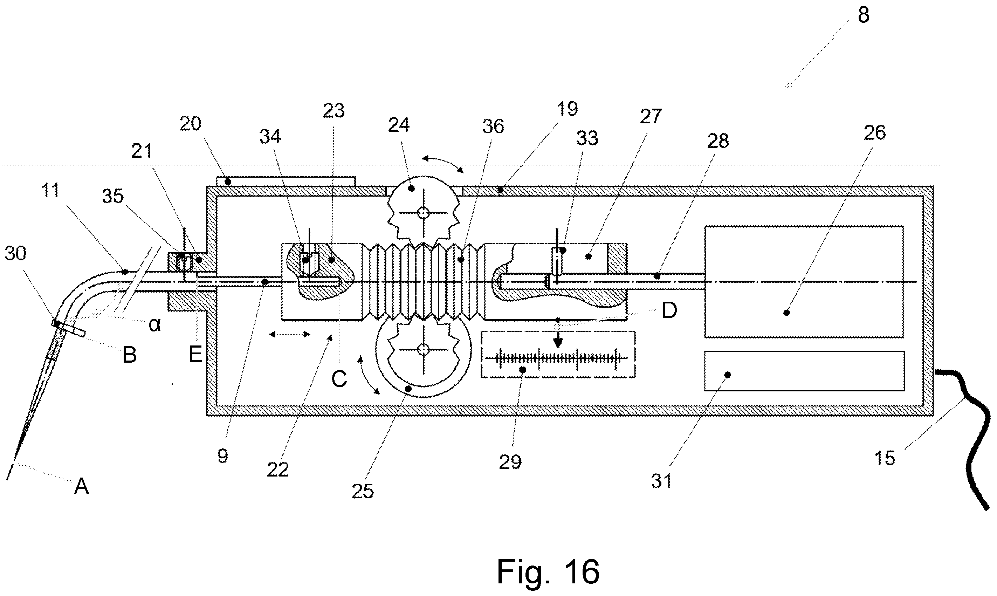

Um nun auf einen "Kopf" und letztendlich auf ein "Winkelstück" vollständig verzichten zu können, ist, wie in Figuren 5 und 16 ersichtlich, der klassische Arbeitsbereich mit der Arbeitslänge L und den Arbeitsbereichsgrenzen A, B der Wurzelkanalfeile 1 deutlich verlängert und die Wurzelkanalfeile 1 besitzt keinen Verbindungsschaft 3. Die Spitze 10 dieser erfindungsgemäßen Wurzelkanalfeile beziehungsweise des Feilendrahts wird wie bei den aktuell im Markt verfügbaren Feilen nach den jeweiligen therapeutischen Anforderungen (zum Beispiel durch Schleifen) als Arbeitsbereich 2 ausgebildet (profiliert) und durch Wärmebehandlung etc. entsprechend den jeweiligen Anforderungen konditioniert. Der auf den Arbeitsbereich folgende, in der Regel unprofilierte, Mittelabschnitt 32 wird dann allerdings - idealerweise nur durch eine Wärmebehandlung - so ausgestaltet, dass er insbesondere gut und mit wenig Kraftaufwand und vorzugsweise reversibel verformbar wird sowie eine möglichst hohe zyklische Ermüdungsfestigkeit erhält. Ziel ist es, dass sich dieser Bereich auch in radial abgebogener Form weiterhin möglichst leicht tordieren und axial verschieben lässt, möglichst wenig von seiner Torsionsfestigkeit verliert und eine hohe zyklische Ermüdungsfestigkeit aufweist, vergleiche Figuren 3 und 4.

Gemäß Figur 5 wird die derartig gestaltete endodontische Wurzelkanalfeile 1 axial und rotatorisch beziehungsweise in Umfangsrichtung frei beweglich in ein Führungsrohr 11 eingeführt. Die Toleranzen von Innendurchmesser des Führungsrohrs und Außendurchmesser des Feilendrahts 9 der erfindungsgemäßen Wurzelkanalfeile sind dabei so zu wählen, dass eine optimale radiale und axiale Beweglichkeit bei gleichzeitig guter radialer Führung gewährleistet sind. Vorzugsweise ist dabei zwischen Führungsrohr und Feilendraht ein radialer Spalt gebildet. Gegebenenfalls kann das Austrittsende 12 des Führungsrohrs zur Verbesserung des Führungsverhaltens enger gestaltet werden als zum Beispiel der gekrümmte Krümmungsbereich 13 des Führungsrohrs.

Dieser gekrümmte Teil des Führungsrohrs wird so gebogen, dass der Arbeitsbereich der Feile aus dem Austrittsbereich des Führungsrohrs gegenüber dem geraden Anschlussbereich 14 des Führungsrohrs mit einem Winkel α vorzugsweise im Bereich von 80° bis 130° und besonders bevorzugt mit 110° ± 5° austritt. Die Biegung des Führungsrohrs kann dabei auch auf mehrere Abschnitte entlang einer Rohrlänge des Führungsrohrs verteilt werden. Der Feilendraht der erfindungsgemäßen Wurzelkanalfeile ist dann so gestaltet, dass in jedem Betriebszustand sichergestellt ist, dass sich in den gekrümmten Abschnitten des Führungsrohrs auch besonders gut verformbare Zonen des Feilendrahts befinden, sodass eine axiale Verschiebbarkeit und leichtgängige Tordierbarkeit des Feilendrahts in dem Führungsrohr gewährleistet ist.

Entsprechend Figur 6 kann sich die gut verformbare Zone auch auf das gesamte Feilendrahtsegment nach dem Arbeitsbereich 2, also insbesondere auch auf den sich an den Mittelabschnitt 32 anschließenden Anschlussabschnitt 37 des Feilendrahts, erstrecken.

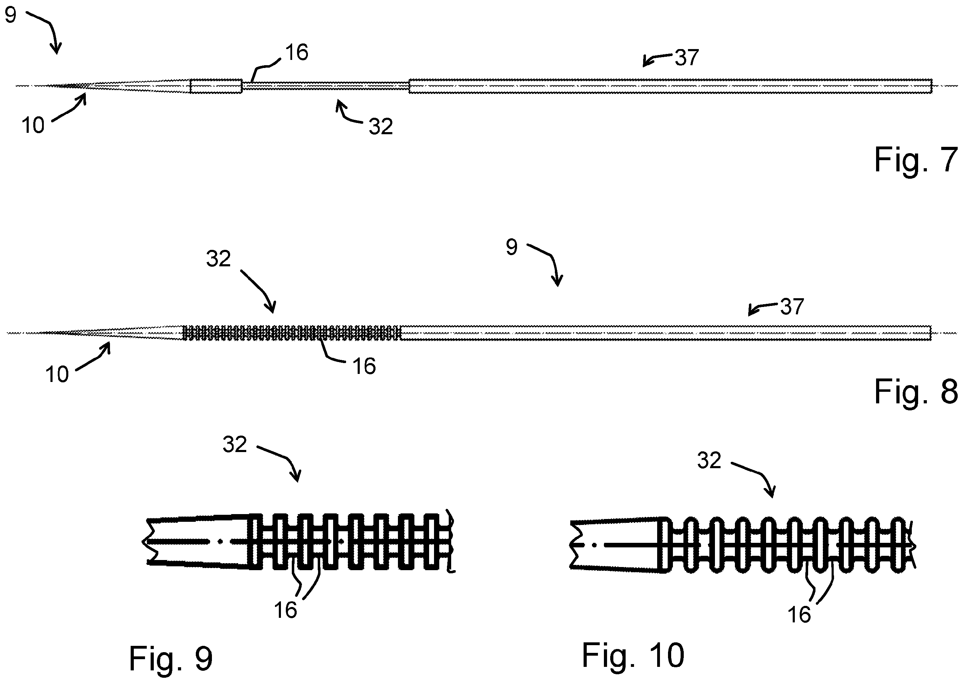

In einer weiteren Ausprägung der Wurzelkanalfeile können die gut verformbaren Zonen des Feilendrahts auch durch eine strukturelle materielle Schwächung ausgebildet werden. Denkbar ist zum Beispiel, an diesen Stellen den Drahtdurchmesser beziehungsweise Querschnitt des Feilendrahts zu verringern (Querschnittsreduzierung 16) und so die Biegbarkeit des Feilendrahts weiter zu verbessern. Eine entsprechende Querschnittsreduzierung im Mittelabschnitt des Feilendrahts in Form einer Ausklinkung zeigt Figur 7.

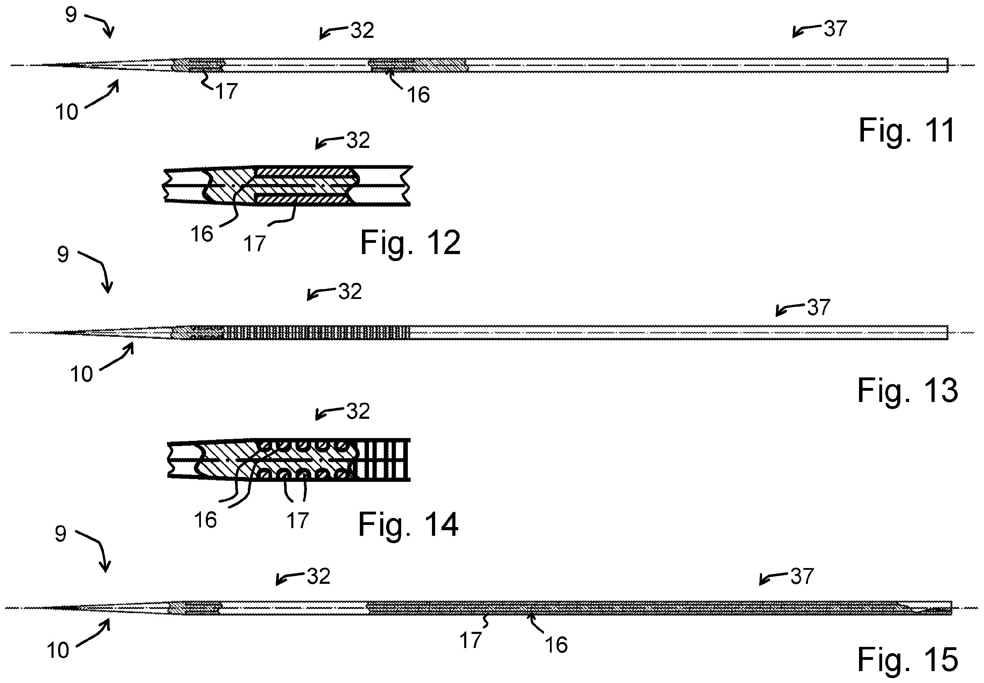

Eine ähnliche Wirkung kann erzielt werden, wenn diese Rücknahme des Drahtdurchmessers nur in kurzen Abständen, zum Beispiel durch rotatorisch angelegte Einstiche beziehungsweise Nuten gemäß den Figuren 8 und 9 oder gemäß den Figuren 13 und 14 in den Außendurchmesser erfolgt. Dadurch bliebe dort auch die Führung des Feilendrahts im Führungsrohr erhalten. Die Geometrie der Querschnittsreduzierungen ist in weiten Grenzen frei wählbar und kann beispielsweise auch radial-spiralförmig verlaufen. Des Weiteren kann es vorteilhaft sein, die verbleibenden radialen Stege an ihren Kanten stark abzurunden, um einerseits die Reibung des Feilendrahts im Führungsrohr zu reduzieren und andererseits die axiale Verschiebbarkeit des Feilendrahtes im Führungsrohr weiter zu verbessern. Figur 10 zeigt eine solche Ausführungsform des Feilendrahts mit abgerundeten Kanten der radialen Stege.

Zur Gewährleistung der Führung und gegebenenfalls auch zur Verbesserung des Gleitverhaltens ist es ebenfalls denkbar, die strukturell geschwächten Drahtbereiche mit einem gut verformbaren Füllwerkstoff 17, zum Beispiel einem (gut gleitfähigen) Kunststoff auf den ehemaligen Außendurchmesser des Feilendrahts, zum Beispiel durch Umspritzen (Spritzguss), wieder aufzufüllen. Verschiedene Ausführungsbeispiele hierzu geben die Figuren 11 bis 15 an. Diese Maßnahmen sind naturgemäß auch für den gesamten Bereich des Feilendrahts nach dem Arbeitsbereich, also zusätzlich zu dem Mittelabschnitt 32 auch für den Anschlussabschnitt 37 des Feilendrahts, denkbar, wie in dem Ausführungsbeispiel nach Figur 15 angegeben.

Des Weiteren ist es denkbar, den Spalt zwischen Feilendraht und Führungsrohr mit einem physiologisch unbedenklichen Gleitmittel aufzufüllen. Dieses Gleitmittel kann bei entsprechender Auswahl (zum Beispiel über die Viskosität) auch als Barriere gegen im Spalt durch Kapillarwirkung aufsteigende, unter Umständen biozide Flüssigkeiten aus dem behandelten Zahn wirken. Für diese Lösung bieten sich vorzugsweise auch die Einkerbungen eines, insbesondere gemäß den Figuren 8 bis 10, strukturell geschwächten Bereiches an.

Die so gestalteten Feilendrähte in Kombination mit den oben beschriebenen Führungsrohren lassen sich dann mit einem ebenfalls Handstück 8 kombinierten.

Figur 16 zeigt eine Prinzipskizze einer solchen Anordnung. Das Handstück 8 besteht aus einem Gehäuse 19 mit einem noch näher zu beschreibenden Innenaufbau, einem User-Interface 20 und - sofern es nicht drahtlos mit einer externen Steuereinheit verbunden ist - einer Zuleitung 15. Die eventuell vorhandene externe Steuereinheit ist nicht dargestellt. Im einfachsten Fall besteht die Steuereinheit aus einer Stromversorgung oder einer Ladeeinheit für das hier beschriebene drahtlos arbeitende endodontische Behandlungssystem.

Ebenso kann die Wurzelkanalfeile eine in dem Gehäuse des Handstücks integrierte interne Steuereinheit aufweisen.

Zur Ausübung der beabsichtigten Funktion wird das Führungsrohr 11 fest an eine Mündungsöffnung 21 des Gehäuses angekoppelt. Das kann - wie in der Figur 16 prinzipiell dargestellt - durch eine Klemmung mittels einer Klemmschraube 35 erfolgen.

In der Praxis wird man hier eine einfacher und ergonomischer zu bedienende Verbindung wie beispielsweise eine Bajonettverbindung oder eine (vorzugsweise sogar automatisch betätigte) Spannzange wählen. Die Spannzange oder eine anders geartete, dafür geeignete Vorrichtung könnte zum Beispiel mittels eines Aktuators aus einer Formgedächtnislegierung betätigt/ verriegelt/ entriegelt werden. Funktional muss hier eine axial und in Umfangsrichtung beziehungsweise radial steife Verbindung des Führungsrohrs mit dem Gehäuse erfolgen.

Der Feilendraht 9 wird dann ebenfalls radial und axial steif mit der radial und axial beweglichen Kupplung 22 gekoppelt. Diese Kopplung 23 kann wie oben beschrieben ebenfalls - wie in Figur 16 prinzipiell dargestellt - durch eine Klemmung mittels einer Klemmschraube 34 erfolgen. Da sich diese Kopplung aber im Inneren des Gehäuses des Handstücks befindet, wird man hier vorzugsweise eine einfacher und ergonomischer zu bedienende Verbindung wählen. Durch den hier zur Verfügung stehenden Bauraum ist auch eine reibschlüssige Verbindung wie zum Beispiel eine (automatisch betätigte) Spannzange denkbar. Die Spannzange oder eine anders geartete dafür geeignete Vorrichtung könnte zum Beispiel mittels eines Aktuators aus einer Formgedächtnislegierung betätigt/ verriegelt/ entriegelt werden.

Erfindungsgemäß kann die radial und axial bewegliche Kupplung 22 wahlweise oder kombiniert über die mechanische Handverstellung 24 und/oder aktorisch über den Stellmotor 25 axial verschoben werden. Eine Handbetätigung ist ebenfalls über einen entsprechenden Befehl über das User-Interface an den Stellmotor denkbar. Die mechanische Handverstellung kann dann entfallen. Die Kupplung kann hierzu beispielsweise eine Außenverzahnung 36 aufweisen, in die ein über die Handverstellung 24 beziehungsweise den Stellmotor 25 rotierbares Zahnrad eingreift. Das der Handverstellung zugeordnete Zahnrad ist dabei vorzugsweise von einer Gehäuseöffnung 38 des Gehäuses des Handstücks aus für eine manuelle Handverstellung zugänglich.

Entsprechende Befehle können auch von einer externen Steuereinheit kommen. In allen Fällen ist es denkbar, dass die aktuelle gewählte Länge am User-Interface des Handstücks und/oder gegebenenfalls der externen Steuereinheit dargestellt wird. Das ist möglich, da dabei die aktuelle Arbeitslänge L des Arbeitsbereichs mit den Arbeitsbereichsgrenzen A, B der Wurzelkanalfeile 1 zu jeder Zeit bekannt ist.

Mittels dieser Anordnung ist es nun möglich, sowohl die aktive Arbeitslänge L des Arbeitsbereichs mit den Arbeitsbereichsgrenzen A, B in weitem Maß zu verstellen (und damit den Anforderungen der Behandlung anzupassen) als auch der rotatorischen Bewegung des Feilendrahts eine nahezu beliebige axiale Bewegung zu überlagern. In einer besonders vorteilhaften Ausprägung sind dabei rotatorische und axiale Bewegung so miteinander kombiniert, dass sich ein erfindungsgemäßer, in Effizienz und Effektivität bislang nicht erreichbarer Behandlungsablauf ergibt. So ist es als ein Beispiel denkbar, der "abtragenden" Drehbewegung des Feilendrahts eine (kleine) Vorwärtsbewegung in Richtung Apex zu überlagern und so einen fein kontrollierbaren Vorschub zu ermöglichen. Bei einer "lösenden" Gegenbewegung der Wurzelkanalfeile könnte dann analog ein entgegengesetzter (größerer) Hub überlagert werden, um einen optimalen Abtransport der abgetragenen Substanz zu gewährleisten.

An dem Führungsrohr 11 ist ein bündig mit dem Austrittsende 12 abschließender Anschlag 30 vorgesehen. Der Anschlag 30 ist vorzugsweise als eine exzentrisch in Bezug auf eine Drahtachse des Feilendrahts 9 geformte und radial beweglich gehaltene Anschlagscheibe ausgeführt. Im Bereich des Anschlags 12 beziehungsweise an dem Austrittsende 12 des Führungsrohrs 11 kann darüber hinaus eine Bestimmung des Drehmoments und/oder der insbesondere axial wirkenden Kräfte erfolgte. Auf diese Weise können die auf den Arbeitsbereich 12 des Feilendrahts 9 wirkenden Kräfte beziehungsweise Momente bestimmt werden und es kann einem Feilenbruch vorgebeugt werden.

Die rotatorische Bewegung des Feilendrahts wird durch den Antriebsmotor 26 über die Kupplung 22 induziert. Der Antriebsmotor ist dabei über seine Antriebswelle 28 in der Kupplung - wie in Figur 16 prinzipiell gezeigt über einen vorzugsweise senkrecht zu der Antriebswelle radial angeordneten Bolzen 33 - vorzugsweise radial steif, aber axial beweglich angebunden (Kopplung 27). Dadurch kann der rotatorischen Bewegung des Feilendrahts eine axiale Bewegung überlagert werden, ohne dass der Antriebsmotor selbst entlang seiner Achse 18 mitbewegt werden muss. Die Figur 16 zeigt (nur) eine prinzipielle Ausprägung einer solchen Kopplungsart.

Im Handstück befindet sich weiterhin ein Wegmesssystem 29, welches in der Lage ist, die axiale Bewegung der Kupplung und somit - bei Kopplung der Wurzelkanalfeile wie oben beschrieben - die axiale Position des Feilendrahts und die ausgetretene Arbeitslänge L des Arbeitsbereichs mit den Arbeitsbereichsgrenzen A B aus dem Austrittsende des Führungsrohrs 11 in Bezug auf das Handstück 8 zu messen. Ist die Wurzelkanalfeile 1 definiert - zum Beispiel bis zu einem Kupplungsanschlag (Position C) - in der Kupplung (Kopplung 23) eingespannt, dann ist die Strecke A-C - Feilenspitze (Position A) bis Kupplungsanschlag (Position C) an dem Führungsrohr 11 in der Kupplung - über die physische Länge des Feilendrahts 9 insgesamt bekannt. Gleiches gilt für die Länge und Position des Führungsrohres 11 (Strecke B-E). Über die gemessene axiale Position D der Kupplung und die bekannten Geometrien im Inneren des Handstücks kann dann definiert die Arbeitslänge L des Arbeitsbereichs mit den Arbeitsbereichsgrenzen A, B der Wurzelkanalfeile 1 berechnet werden.

Die elektrotechnischen beziehungsweise elektronischen Komponenten, beispielsweise ein aufladbarer elektrischer Energiespeicher, ein Druck- und/oder Drehmomentsensor, das Wegmesssystem, der Stellmotor, der Antriebsmotor, eine Fördereinrichtung für ein Fluid, eine Lichtquelle sowie das User-Interface sind vorzugsweise mit der in dem Gehäuse 19 integrierten internen Steuereinheit des Handstücks 8 oder über die Zuleitung mit einer externen Steuereinheit (Elektronikeinheit 31) wirkverbunden. Unter Beibehaltung der erfinderischen Idee ist ebenso denkbar, dass beispielsweise die Steuereinheit und das User-Interface einteilig ausgeführt sind.

### Bezugszeichenliste

- 1: Wurzelkanalfeile
- 2: Arbeitsbereich
- 3: Verbindungsschaft
- 4: Kopf
- 5: Winkelstück
- 6: Antrieb
- 7: Anschlagscheibe
- 8: Handstück
- 9: Feilendraht
- 10: Spitze
- 11: Führungsrohr
- 12: Austrittsende
- 13: Krümmungsbereich
- 14: Anschlussbereich
- 15: Zuleitung
- 16: Querschnittsreduzierung
- 17: Füllwerkstoff
- 18: Achse
- 19: Gehäuse
- 20: User-Interface
- 21: Mündungsöffnung
- 22: Kupplung
- 23: Kopplung
- 24: Handverstellung
- 25: Stellmotor
- 26: Antriebsmotor
- 27: Kopplung
- 28: Antriebswelle
- 29: Wegmesssystem
- 30: Anschlag
- 31: Elektronikeinheit
- 32: Mittelabschnitt
- 33: Bolzen
- 34: Klemmschraube
- 35: Klemmschraube
- 36: Außenverzahnung
- 37: Anschlussabschnitt
- 38: Gehäuseöffnung
- A: Arbeitsbereichsgrenze
- B: Arbeitsbereichsgrenze
- C: Kupplungsanschlag
- D: Messposition
- E: Ende des Führungsrohrs
- L: Arbeitslänge
- α: Winkel

## Patentansprüche

1. Endodontisches Behandlungssystem umfassend ein Handstück (8) und umfassend eine lösbar an das Handstück (8) ankoppelbare Wurzelkanalfeile (1), wobei die Wurzelkanalfeile (1) ein gekrümmtes Führungsrohr (11) und einen metallischen Feilendraht (9) mit einer Spitze
(10), mit einem sich an die Spitze (10) anschließenden Mittelabschnitt (32) und mit einem sich an den Mittelabschnitt (32) anschließenden Anschlussabschnitt (37) aufweist, wobei das Handstück (8) ein Gehäuse (19), einen in dem Gehäuse (19) angeordneten Antriebsmotor (26) und eine drehsteif mit einer Antriebswelle (28) des Antriebsmotors (26) verbundene und rotierbar in dem Gehäuse (19) gelagerte Kupplung (22) zum Übertragen einer Rotationsbewegung des Antriebsmotors (26) auf den Feilendraht (9) aufweist, **dadurch gekennzeichnet, dass** die Kupplung (22) manuell und/oder aktorisch axial verstellbar in dem Gehäuse (19) gelagert ist derart, dass eine Arbeitslänge (L) eines Arbeitsbereichs (A-B) der Wurzelkanalfeile (1), mit dem ein freies Ende (A) der Spitze (10) des Feilendrahts (9) aus dem Führungsrohr (11) herausragt, einstellbar ist.

2. Endodontisches Behandlungssystem nach Anspruch 1, **dadurch gekennzeichnet, dass** der Feilendraht (9) im Bereich des Mittelabschnitts (32) verformbar, mit hoher Torsionssteifigkeit und hoher Ermüdungsfestigkeit ausgebildet ist.

3. Endodontisches Behandlungssystem nach Anspruch 1 oder 2, **dadurch gekennzeichnet, dass** der Feilendraht (9) in dem gekrümmten Führungsrohr (11) jedenfalls im Bereich des Mittelabschnitts (32) radial und axial beweglich geführt ist, wobei zum einen das Führungsrohr (11) in einer Mündungsöffnung (21) des Gehäuses (19) und zum anderen der Anschlussabschnitt (37) des Feilendrahts (9) in der Kupplung (22) lösbar sowie radial und axial steif eingespannt sind.

4. Endodontisches Behandlungssystem nach einem der Ansprüche 1 bis 3, **dadurch gekennzeichnet, dass** der Feilendraht (9) einstückig hergestellt und aus einem korrosionsbeständigen Metall und vorzugsweise aus einer FormgedächtnisLegierung und besonders bevorzugt aus einer Nickel-Titan-Legierung hergestellt ist.

5. Endodontisches Behandlungssystem nach einem der Ansprüche 1 bis 4, **dadurch gekennzeichnet, dass** der Feilendraht (9) mehrstückig hergestellt ist, wobei der Mittelabschnitt (32) des Feilendrahts (9) aus einem vorzugsweise weicheren Werkstoff hergestellt ist als die Spitze (10) und/oder der Anschlussabschnitt (37) des Feilendrahts (9).

6. Endodontisches Behandlungssystem nach einem der Ansprüche 1 bis 5, **dadurch gekennzeichnet, dass** der Feilendraht (9) im Bereich des Mittelabschnitts (32) wenigstens eine und vorzugsweise eine Querschnittsreduzierung (16) aufweist.

7. Endodontisches Behandlungssystem nach Anspruch 6, **dadurch gekennzeichnet, dass** die Querschnittsreduzierung (16) des Feilendrahts (16) mit einem verformbaren und gleitfähigen Füllwerkstoff (17) aufgefüllt und vorzugsweise mit einem thermoplastischen und/oder elastomeren Kunststoff umspritzt ist.

8. Endodontisches Behandlungssystem nach einem der Ansprüche 1 bis 7, **dadurch gekennzeichnet, dass** ein zwischen dem Führungsrohr (11) und dem Feilendraht (9) gebildeter Spalt mit einem flüssigen und/oder viskosem Gleitmittel gefüllt ist.

9. Endodontisches Behandlungssystem nach einem der Ansprüche 1 bis 8, **dadurch gekennzeichnet, dass** das Führungsrohr (11) in einem der Spitze (10) des Feilendrahts (9) zugewandten Austrittsende (12) einen reduzierten Rohraußendurchmesser aufweist und vorzugsweise ringsum an den Feilendraht (9) angelegt ist.

10. Endodontisches Behandlungssystem nach einem der Ansprüche 1 bis 9, **dadurch gekennzeichnet, dass** an dem Führungsrohr (11) ein bündig mit dem Austrittsende (12) abschließender Anschlag (30) und vorzugsweise eine exzentrisch in Bezug auf eine Drahtachse des Feilendrahts (9) geformte und radial beweglich gehaltene Anschlagscheibe gehalten ist.

11. Endodontisches Behandlungssystem nach einem der Ansprüche 1 bis 10, **dadurch gekennzeichnet, dass** zur Einspannung des Feilendrahts (9) an der Kupplung (22) und/oder des Führungsrohrs (11) an dem Gehäuse (19) des Handstücks (8) eine Klemmschraube (34, 35) und/oder ein Bajonettverschluss und/oder eine federbelastete und/oder aktorisch betätigbare Klemmeinrichtung vorgesehen ist.

12. Endodontisches Behandlungssystem nach einem der Ansprüche 1 bis 11, **dadurch gekennzeichnet, dass** die Kupplung (22) eine Außenverzahnung (36) aufweist und dass in dem Gehäuse (19) ferner ein in die Außenverzahnung (36) eingreifendes und aktorisch von einem in dem Gehäuse (19) angeordneten Stellmotor (25) angetriebenes und/oder ein durch eine Gehäuseöffnung (38) des Gehäuses (19) zugängliches und manuell verstellbares Zahnrad angeordnet ist derart, dass eine axiale Verstellung der Kupplung (22) ausführbar ist, indem das Zahnrad rotiert wird.

13. Endodontisches Behandlungssystem nach einem der Ansprüche 1 bis 12, **dadurch gekennzeichnet, dass** in dem Gehäuse (19) des Handstücks (8) ferner ein vorzugsweise elektrisches Wegmesssystem (29) angeordnet ist, wobei das Wegmesssystem (29) dazu ausgebildet ist, eine axiale Verschiebung der Kupplung (22) zu bestimmen.

14. Endodontisches Behandlungssystem nach einem der Ansprüche 1 bis 13, **dadurch gekennzeichnet, dass** das Handstück (8) ferner einen in dem Gehäuse (19) angeordneten aufladbaren elektrischen Energiespeicher aufweist und drahtlos betreibbar ist.

15. Endodontisches Behandlungssystem nach einem der Ansprüche 1 bis 14, **dadurch gekennzeichnet, dass** dem Anschlag (30) ein Sensor und vorzugsweise ein Drucksensor zugeordnet ist derart, dass ein Kontakt des Anschlags (30) mit einem zu behandelnden Zahn detektierbar ist.

16. Endodontisches Behandlungssystem nach einem der Ansprüche 1 bis 15, **dadurch gekennzeichnet, dass** über an dem Führungsrohr (11) gehaltene und hierzu parallel verlaufende Spülleitung und/oder über den zwischen dem Führungsrohr (11) und dem Feilendraht (9) gebildeten Spalt ein Fluid über eine daran angeschlossene Fördereinrichtung zuführbar und/oder absaugbar ist.

17. Endodontisches Behandlungssystem nach einem der Ansprüche 1 bis 16, **dadurch gekennzeichnet, dass** das Führungsrohr (11) lichtleitend ausgebildet ist und/oder dass an dem Führungsrohr (11) ein hierzu parallel verlaufender Lichtleiter gehalten ist und dass in dem Gehäuse (19) des Handstücks (8) eine mit dem Lichtleiter und/oder dem Führungsrohr (11) wirkverbundene Lichtquelle angeordnet ist.

18. Endodontisches Behandlungssystem nach einem der Ansprüche 1 bis 17, **dadurch gekennzeichnet, dass** das Handstück (8) ferner ein außenseitig an dem Gehäuse (19) gehaltenes und mit einer mit den elektrischen Komponenten (25, 26, 29) des Handstücks (8) wirkverbundenen internen Steuereinheit und/oder externen Steuereinheit wirkverbundenes User-Interface (20) aufweist, wobei das User-Interface (20) ein Display und/oder Bedienelemente zur Eingabe von Steuerbefehlen und/oder akustische und/oder optische und/oder haptische Signalgeber aufweist.

19. Endodontisches Behandlungssystem nach einem der Ansprüche 1 bis 18, **dadurch gekennzeichnet, dass** über das User-Interface (20) ein Messwert des Wegmesssystems (29) ausgebbar ist und/oder die aktorische axiale Verstellung der Kupplung (22) definiert einstellbar ist.

20. Endodontisches Behandlungssystem nach einem der Ansprüche 1 bis 19, weiter umfassend ein im Gehäuse (19) des Handstücks (8) und vorzugsweise in der Kupplung (22) und besonders bevorzugt im Führungsrohr (11) im Bereich des Austrittsendes (12) angeordneter Momentenaufnehmer und/oder Kraftaufnehmer, der bestimmt ist, um auf den Feilendraht (9) einwirkende Momente und/oder Kräfte zu ermitteln.

## Claims

1. An endodontic treatment system comprising a handpiece (8) and comprising a root canal file (1) detachably couplable to the handpiece (8), the root canal file (1) having a curved guide tube (11) and a metallic file wire (9) with a tip (10), with a middle section (32) adjoining the tip (10), and with a connecting section (37) adjoining the middle section (32), the handpiece (8) having a housing (19), a drive motor (26) arranged in the housing (19), and a coupling (22) connected to a drive shaft (28) of the drive motor (26) in a torsionally rigid manner and rotatably supported in the housing (19) for transmitting a rotational movement of the drive motor (26) to the file wire (9), **characterized in that** the coupling (22) is supported in the housing (19) so that it is axially adjustable by hand and/or an actuator, such that a working length (L) of a work area (A-B) of the root canal file (1), with which a free end (A) of the tip (10) of the file wire (9) protrudes from the guide tube (11), is settable.

2. The endodontic treatment system according to claim 1, **characterized in that** the file wire (9) is deformable in the region of the middle section (32), and is designed with high torsional rigidity and high fatigue strength.

3. The endodontic treatment system according to claim 1 or 2, **characterized in that** the file wire (9) is radially and axially movably guided in the curved guide tube (11), in any case in the region of the middle section (32), the guide tube (11) in a mouth opening (21) of the housing (19), on the one hand, and the connecting section (37) of the file wire (9) in the coupling (22), on the other hand, being clamped detachably and in a radially and axially rigid manner.

4. The endodontic treatment system according to any of claims 1 to 3, **characterized in that** the file wire (9) is manufactured in one piece and is manufactured from a corrosion-resistant metal and preferably from a shape memory alloy and particularly preferably from a nickel-titanium alloy.

5. The endodontic treatment system according to any of claims 1 to 4, **characterized in that** the file wire (9) is manufactured in multiple pieces, the middle section (32) of the file wire (9) being manufactured from a preferably softer material than the tip (10) and/or the connecting section (37) of the file wire (9).

6. The endodontic treatment system according to any of claims 1 to 5, **characterized in that** the file wire (9) has at least one and preferably one cross-sectional reduction (16) in the region of the middle section (32).

7. The endodontic treatment system according to claim 6, **characterized in that** the cross-sectional reduction (16) of the file wire (16) is filled with a deformable and slidable filler material (17) and is preferably overmolded with a thermoplastic and/or elastomeric plastic.

8. The endodontic treatment system according to any of claims 1 to 7, **characterized in that** a gap formed between the guide tube (11) and the file wire (9) is filled with a liquid and/or viscous lubricant.

9. The endodontic treatment system according to any of claims 1 to 8, **characterized in that** the guide tube (11) has a reduced tube outer diameter in an exit end (12) facing the tip (10) of the file wire (9) and is preferably placed adjacent all around the file wire (9).

10. The endodontic treatment system according to any of claims 1 to 9, **characterized in that** on the guide tube (11) there is held a stop (30) terminating flush with the exit end (12) and preferably a stop disk shaped eccentrically in relation to a wire axis of the file wire (9) and held radially movably.

11. The endodontic treatment system according to any of claims 1 to 10, **characterized in that** for clamping the file wire (9) to the coupling (22) and/or the guide tube (11) on the housing (19) of the handpiece (8) there is provided a clamping screw (34, 35) and/or a bayonet lock and/or a spring-loaded and/or actuator-actuatable clamping device.

12. The endodontic treatment system according to any of claims 1 to 11, **characterized in that** the coupling (22) has an external toothing (36) and that in the housing (19) there is further arranged a gear wheel that is engaging in the external toothing (36) and driven by actuator by a servomotor (25) arranged in the housing (19) and/or is accessible through a housing opening (38) of the housing (19) and is manually adjustable, such that an axial adjustment of the coupling (22) is executable by rotating the gear wheel.

13. The endodontic treatment system according to any of claims 1 to 12, **characterized in that** in the housing (19) of the handpiece (8) there is further arranged a preferably electrical distance measuring system (29), the distance measuring system (29) being designed to determine an axial displacement of the coupling (22).

14. The endodontic treatment system according to any of claims 1 to 13, **characterized in that** the handpiece (8) further has a chargeable electrical energy store arranged in the housing (19) and is wirelessly operable.

15. The endodontic treatment system according to any of claims 1 to 14, **characterized in that** the stop (30) is assigned a sensor and preferably a pressure sensor, such that a contact of the stop (30) with a tooth to be treated is detectable.

16. The endodontic treatment system according to any of claims 1 to 15, **characterized in that** via a rinsing line held on the guide tube (11) and running parallel thereto and/or via the gap formed between the guide tube (11) and the file wire (9) a fluid is suppliable and/or suctionable via a conveying device connected thereto.

17. The endodontic treatment system according to any of claims 1 to 16, **characterized in that** the guide tube (11) is designed to be light-conducting and/or that on the guide tube (11) there is held a light conductor running parallel thereto and that in the housing (19) of the handpiece (8) there is arranged a light source operatively connected to the light conductor and/or the guide tube (11).

18. The endodontic treatment system according to any of claims 1 to 17, **characterized in that** the handpiece (8) further has a user interface (20) held on the outside of the housing (19) and operatively connected to an internal control unit and/or external control unit operatively connected to the electrical components (25, 26, 29) of the handpiece (8), the user interface (20) having a display and/or operating elements for inputting control commands and/or acoustic and/or optical and/or haptic signal generators.

19. The endodontic treatment system according to any of claims 1 to 18, **characterized in that** via the user interface (20) a measured value of the distance measuring system (29) can be output and/or the axial adjustment of the coupling (22) by actuator is settable in a defined manner.

20. The endodontic treatment system according to any of claims 1 to 19, further comprising a torque transducer and/or force transducer arranged in the housing (19) of the handpiece (8) and preferably in the coupling (22) and particularly preferably in the guide tube (11) in the region of the exit end (12), which is intended to ascertain torques and/or forces acting on the file wire (9).

## Revendications

1. Système de traitement endodontique comprenant une pièce à main (8) et comprenant une lime pour canal radiculaire pouvant être couplée de façon amovible à la pièce à main (8), la lime pour canal radiculaire (1) présentant un tube-guide (11) incurvé et un fil de limage (9) métallique avec une pointe (10), avec une section médiane (32) attenante à la pointe (10) et une section d'accouplement (37) attenante à la section médiane (32), la pièce à main (8) présentant un boîtier (19) et un moteur d'entraînement (26) agencé dans le boîtier (19) et un accouplement (22) solidaire en rotation de la tige d'entraînement (28) du moteur d'entraînement (26) et logé dans le dans le boîtier (19) de façon à pouvoir tourner pour assurer la transmission d'un mouvement de rotation du moteur d'entraînement (26) au fil de limage (9), **caractérisé en ce que** l'accouplement (22) est logé dans le boîtier (19) de façon à ce que sa position axiale soit réglable manuellement ou par actionneur de sorte à pouvoir ajuster une longueur de travail (L) d'une section de travail (A-B) de la lime pour canal radiculaire (1) dont une extrémité libre (A) de la pointe (10) du fil de limage (9) fait saillie hors du tube-guide (11).

2. Système de traitement endodontique selon la revendication 1, **caractérisé en ce que** le fil de limage (9) est conçu pour être déformable au niveau de la section médiane (32) et présenter une forte rigidité à la torsion et une forte résistance à la fatigue.

3. Système de traitement endodontique selon la revendication 1 ou 2, **caractérisé en ce que** le fil de limage (9) est guidé dans le tube-guide incurvé (11) de façon à être mobile radialement et axialement, en tout cas au niveau de la section médiane (32), le tube-guide (11) étant, d'une part, serré de façon amovible mais radialement et axialement rigide dans un orifice de sortie (21) du boîtier (19) et la section d'accouplement (37) du fil de limage (9) étant, d'autre part, serrée de façon amovible mais radialement et axialement rigide dans l'accouplement (22).

4. Système de traitement endodontique selon l'une des revendications 1 à 3, **caractérisé en ce que** le fil de limage (9) est réalisé d'un seul tenant en un métal résistant à la corrosion et, de préférence, en un alliage à mémoire de forme, de préférence particulière en un alliage nickel-titane.

5. Système de traitement endodontique selon l'une des revendications 1 à 4, **caractérisé en ce que** le fil de limage (9) est réalisé en plusieurs parties, la section médiane (32) du fil de limage (9) étant de préférence réalisée en un matériau plus tendre que la pointe (10) et/ou que la section d'accouplement (37) du fil de limage (9).

6. Système de traitement endodontique selon l'une des revendications 1 à 5, **caractérisé en ce que** le fil de limage (9) présente au niveau de la section médiane (32) au moins une et de préférence une réduction de section (16).

7. Système de traitement endodontique selon la revendication 6, **caractérisé en ce que** la réduction de section (16) du fil de limage (16) est comblée avec un matériau de remplissage (17) déformable et lisse et, de préférence, gainée avec un matériau synthétique thermoplastique et/ou élastomère.

8. Système de traitement endodontique selon l'une des revendications 1 à 7, **caractérisé en ce qu'**un interstice formé entre le tube-guide (11) et le fil de limage (9) est rempli avec un lubrifiant liquide et/ou visqueux.

9. Système de traitement endodontique selon l'une des revendications 1 à 8, **caractérisé en ce que** le tube-guide (11) présente à une extrémité de sortie (12) orientée vers la pointe (10) du fil de limage (9) un diamètre extérieur du tube réduit et est de préférence appliqué contre la périphérie du fil de limage (9).

10. Système de traitement endodontique selon l'une des revendications 1 à 9, **caractérisé en ce que** à l'extrémité du tube-guide (11) est maintenue une butée (30) jointive à l'extrémité de sortie (12), de préférence une rondelle de butée de conformation excentrique par rapport à un axe du fil de limage (9) maintenue de façon radialement mobile.

11. Système de traitement endodontique selon l'une des revendications 1 à 10, **caractérisé en ce que** une vis de serrage (34, 35) et/ou un verrouillage à baïonnette et/ou un dispositif de serrage à ressort et/ou actionnable par actionneur est prévu pour la fixation du fil de limage (9) à l'accouplement (22) et/ou du tube-guide (11) au boîtier (19) de la pièce à main (8).

12. Système de traitement endodontique selon l'une des revendications 1 à 11, **caractérisé en ce que** l'accouplement (22) présente une denture extérieure (36) et **en ce que** dans le boîtier (19) est en outre agencée une roue dentée s'engrenant dans la denture extérieure (36) et actionnée par un servomoteur (25) agencé dans le boîtier (19) et/ou accessible et réglable manuellement par une ouverture (38) du boîtier (19) de façon à obtenir un déplacement axial de l'accouplement (22) par rotation de la roue dentée.

13. Système de traitement endodontique selon l'une des revendications 1 à 12, **caractérisé en ce que** dans le boîtier (19) de la pièce à main (8) est en outre agencé un système de mesure de déplacement (29) de préférence électrique, le système de mesure de déplacement (29) étant conçu pour déterminer un déplacement axial de l'accouplement (22).

14. Système de traitement endodontique selon l'une des revendications 1 à 13, **caractérisé en ce que** la pièce à main présente en outre un accumulateur électrique rechargeable agencé dans le boîtier (19) et pouvant fonctionner sans fil.

15. Système de traitement endodontique selon l'une des revendications 1 à 14, **caractérisé en ce que** un détecteur et de préférence un capteur de pression est affecté à la butée (30) pour permettre de détecter un contact entre la butée (30) et une dent à traiter.

16. Système de traitement endodontique selon l'une des revendications 1 à 15, **caractérisé en ce que** un fluide peut, par l'intermédiaire d'une conduite de rinçage placée au-dessus du tube-guide (11) et parallèle à celui-ci et/ou de l'interstice formé entre le tube-guide (11) et le fil de limage (9), être injecté et/ou aspiré par un dispositif de pompage branché sur la conduite et/ou l'interstice.

17. Système de traitement endodontique selon l'une des revendications 1 à 16, **caractérisé en ce que** le tube-guide (11) est conçu pour être conducteur de lumière et/ou **en ce qu'**un conducteur de lumière est maintenu au tube-guide (11) parallèlement à celui-ci et **en ce que** dans le boîtier (19) de la pièce à main (8) est agencé une source de lumière en liaison fonctionnelle avec le conducteur de lumière et/ou le tube-guide (11).

18. Système de traitement endodontique selon l'une des revendications 1 à 17, **caractérisé en ce que** la pièce à main (8) présente en outre une interface utilisateur (20) placée sur l'extérieur du boîtier (19) et fonctionnellement reliée à une unité de commande interne et/ou externe fonctionnellement reliée aux composantes électriques (25, 26, 29) de la pièce à main (8), l'interface utilisateur (20) présentant un écran et/ou des éléments de commande pour entrer des commandes et/ou des émetteurs de signaux acoustiques et/ou optiques et/ou haptiques.

19. Système de traitement endodontique selon l'une des revendications 1 à 18, **caractérisé en ce que** l'interface utilisateur (20) permet d'émettre une valeur mesurée par le système de mesure de déplacement (29) et/ou de régler par actionneur le déplacement axial de l'accouplement (22).

20. Système de traitement endodontique selon l'une des revendications 1 à 19 comprenant en outre un capteur de couple et/ou un capteur de force agencé dans le boîtier (19) de la pièce à main (8) et de préférence dans l'accouplement (22) et de préférence particulière dans le tube-guide (11) au niveau de l'extrémité de sortie (12) pour déterminer les couples et/ou forces agissant sur le fil de limage (9).
